Europäisches Patentamt

European Patent Office

Office européen des brevets

(11) Veröffentlichungsnummer: **0 219 771**

**A2**

(12) **EUROPÄISCHE PATENTANMELDUNG**

(21) Anmeldenummer: 86113976.4

(22) Anmeldetag: 08.10.86

(51) Int. Cl.⁴: **H04Q 3/42** , H04M 3/44 , H04L 11/00

(30) Priorität: 24.10.85 DE 3537929

(43) Veröffentlichungstag der Anmeldung:
29.04.87 Patentblatt 87/18

(84) Benannte Vertragsstaaten:
AT BE CH DE ES FR GB LI

(71) Anmelder: Siemens Aktiengesellschaft Berlin
und München
Wittelsbacherplatz 2
D-8000 München 2(DE)

(72) Erfinder: Leibersberger, Helmut, Dipl.-Ing.
Terofalstrasse 27
D-8000 München 21(DE)
Erfinder: Wille, Klaus, Dipl.-Ing.
Possartstrasse 24
D-8000 München 80(DE)

(54) Verfahren zum Beeinflussen von Wählziffernbewertungs- und Umsetzprozeduren in einem
programmgesteuerten Fernmeldevermittlungssystem.

(57) Die von einem Fernmeldeteilnehmer eines Fernmeldenetzes in einem programmgesteuerten Vermittlungssystem ankommenden Signalisierungsanreize bzw. Wählziffern, z. B. Kurzrufwählziffern, werden mittels einer Wahlbewertungsprozedur (WABE)
auf das Vorliegen einer umzusetzenden Wählziffernfolge untersucht. Anschließend wird die
Wählziffernfolge mittels einer
Wählziffernumsetzprozedur (WUM, WUMK) in eine
entsprechende Wählziffernfolge umgesetzt, diese
wie Signalisierungsanreize ausgebildet und nochmals der Wahlbewertungsprozedur (WABE) unterzogen. Je nach Bewertungsergebnis wird die umgesetzte Wählziffernfolge in ein entsprechendes Vermittlungsverfahren (VM) einbezogen.

## Verfahren zum Beeinflussen von Wählziffernbewertungs-und Umsetzprozeduren in einem programm-gesteuerten Fernmeldevermittlungssystem

Die Erfindung betrifft ein Verfahren zum Beeinflussen von Wählziffernbewertungs-und Umsetzprozeduren, mittels der die von einem Fernmeldeteilnehmer eines Fernmeldenetzes zu einem programmgesteuerten Fernmeldevermittlungssystem übertragenen Wählziffern bewertet werden und wenn erforderlich, die von einem Teilnehmer übertragene Wählziffernfolge in eine andere Wählziffernfolge umgesetzt wird, wobei die Wählziffernbewertungs-und Umsetzprozeduren in Verbindung mit Vermittlungsverfahren ablaufen, die durch von Fernmeldeteilnehmern oder von Vermittlungssystemen erzeugte unterschiedliche Signalisierungsanreize eingeleitet werden und jeweils zu einem signalisierungsabhängigen Vermittlungssystemzustand führen.

In Fernsprechnetzen ist es üblich, nur diejenigen Wählziffern vom Fernsprechteilnehmer zum Fernsprechvermittlungssystem zu übertragen. die direkt zum Steuern der bekannten Vermittlungsverfahren und somit direkt zur Ermittlung des Verbindungsweges zum gerufenen Teilnehmer erforderlich sind. Die Vermittlungsverfahren werden durch unterschiedliche, in der Fernsprechsignalisierung übliche Signalisierungsanreize, wie z. B. Wählziffern von Teilnehmern, Abheben des Handapparates usw., eingeleitet. Nach Ablauf der von den Signalisierungsanreizen eingeleiteten Vermittlungsverfahren wird ein von der Fernsprechsignalisierung vorgegebener Vermittlungssystemzu stand, z. B. Senden des Ruftones zum gerufenen Teilnehmer, erreicht. Anschließend vom Fernsprechvermittlungssystem oder vom Fernsprechteilnehmer ankommende Signalisierungsanreize leiten weitere signalisierungsabhängige Vermittlungsverfahren ein. Ebenfalls an das Fernsprechvermittlungssystem übertragene Nachwahlziffern werden ggf. zwischengespeichert oder direkt an den gerufenen Fernsprechteilnehmer bzw. an die Fernsprechnebenstellenanlage weitergeleitet. Fernmeldenetze, insbesondere Fernmeldenetze für Daten-und Bürokommunikation erlauben dem Teilnehmer dieser Netze Wählziffern, z. B. Kurzrufwählziffern zum Fernmeldevermittlungssystem zu übertragen, die nicht direkt zum Steuern von Vermittlungsverfahren dienen, sondern vorher in eine entsprechende Wählziffernfolge umgesetzt werden müssen.

Der Erfindung liegt die Aufgabe zugrunde, ein Verfahren anzugeben, mit dem die Wählziffernbewertungs-und Umsetzprozeduren so beeinflußt werden, daß die bekannten Fernsprechvermittlungsverfahren unverändert erhalten bleiben und die Verknüpfungen der Abläufe der Wahlziffernbewertungs-bzw. Umsetzprozeduren und der Vermittlungsverfahren auf ein Minimum beschränkt werden.

Die Lösung der Aufgabe ergibt sich durch die kennzeichnenden Merkmale des Anspruchs 1.

Der Vorteil der Erfindung liegt darin, daß aufgrund der Bewertungs-und Verteilfunktionen der Wahlbewertungsprozedur die mittels einer Wählziffernumsetzprozedur umgesetzte Wählziffernfolge erneut der Wahlbewertungsprozedur unterzogen wird und somit keine Verknüpfungen der Wählziffernumsetzprozeduren mit den bekannten Vermittlungsverfahren erforderlich sind. Dadurch ist ein einfacheres und wirtschaftlicheres Einfügen neuer Wählziffernumsetzprozeduren in ein bekanntes programmgesteuertes Vermittlungssystem mit bekannten Vermittlungsverfahren möglich.

Eine vorteilhafte Weiterbildung gemäß Patentanspruch 2 sieht die Umsetzung einer von einem Fernmeldeteilnehmer ankommenden Kurzrufwählziffernfolge in eine direkt die Vermittlungsverfahren steuernde Fernsprechwählziffernfolge vor. Das erfindungsgemäße Verfahren kann nicht nur für die Umsetzung einer Kurzrufwählziffernfolge in eine andere Wählziffernfolge verwendet, sondern generell zur Umsetzung einer Wählziffernfolge in eine andere Wählziffernfolge eingesetzt werden, wie z. B. für die Realisierung zukünftiger Teilnehmerleistungsmerkmale in zukünftigen Fernmeldenetzen, für die eine Wählziffernumsetzung erforderlich ist.

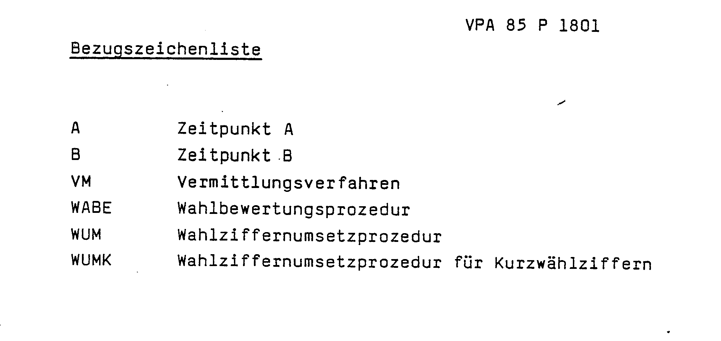

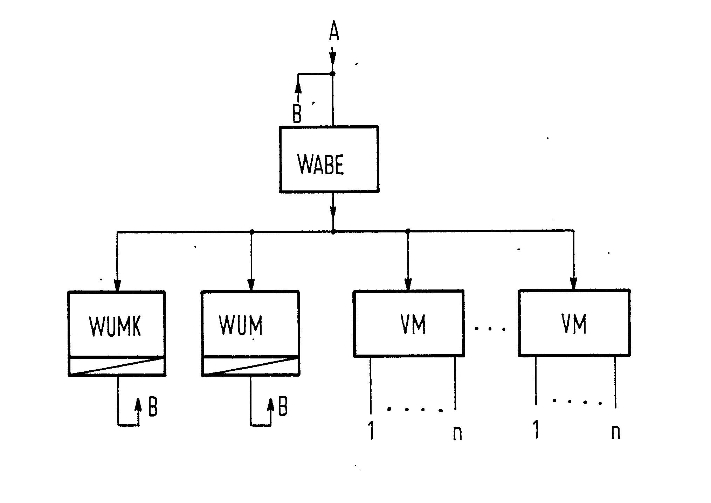

Im folgenden wird ein Ausführungsbeispiel der Erfindung anhand der Zeichnung näher erläutert. Die Zeichnung veranschaulicht das erfindungsgemäße Verfahren im Zusammenhang mit einer Umsetzung einer von einem Fernmeldeteilnehmer zu einem Vermittlungssystem übertragenen Kurzrufwählziffernfolge in eine direkt die Vermittlungsverfahren steuernde Fernsprechwählziffernfolge.

Die jeweils zu einem Zeitpunkt A ankommenden Kurzrufwählziffern werden mittels der nicht dargestellten Steuereinrichtungen des Vermittlungssystems einer Wahlbewertungsprozedur WABE unterworfen. Mit der Wahlbewertungsprozedur WABE wird festgestellt, ob die vorliegende Wählziffernfolge zur weiteren Bewertung direkt zu einem der Vermittlungsverfahren VM oder vorher zu einer Wahlziffernumsetzprozedur WUM weitergeleitet werden muß. Aufgrund einer vorliegenden Kurzrufwählziffernfolge wird diese an eine Wählziffernumsetzprozedur WUMK für Kurzrufwählziffern übergeben und leitet die Wählziffernumsetzprozedur WUMK ein. Mit dieser Wählziffernumsetzprozedur WUMK wird festgestellt, ob eine vollständige und in diesem Fernmeldenetz erlaubte Kurzrufwählziffernfolge vorliegt und ermittelt die der Kurzrufwählziffernfolge zugeordnete, direkt die Vermittlungsverfahren VM steuernde Fernsprechwählziffernfolge. Nach Ablauf der Wählziffernumsetzprozedur für Kurzrufwählziffern WUMK wird die umgesetzte, jedoch in einer internen Verarbeitungsform vorliegende Wählziffernfolge in eine Form gebracht, die der von Signalisierungsanreizen bzw. Wählziffern von einem Fernmeldeteilnehmer entspricht. Diese Signalisierungsanreize werden wiederum -zum Zeitpunkt B -an die Wählbewertungsprozedur WABE weitergeleitet, worauf die Wählbewertungsprozedur WABE neu eingeleitet wird. Mit der Wählbewertungsprozedur WABE wird die umgesetzte Wählziffernfolge bewertet und direkt an eines der Vermittlungsverfahren VM weitergeleitet, z. B. Vermittlungsverfahren für das Verbinden zweier Fernmeldeteilnehmer innerhalb desselben Vermittlungssytems. Die Vermittlungsverfahren VM enden nach Ablauf dieser Verfahren wiederum in signalisierungsabhängigen Vermittlungssystemzuständen (1...n). Die zusätzlich dargestellte Umsetzprozedur WUM zeigt beispielhaft, daß weitere, geforderte Wählinformationsumsetzprozeduren eingefügt werden können, ohne daß Auswirkungen auf die Vermittlungsverfahren VM entstehen. Die Wählbewertungsprozedur WABE muß jedoch um eine zusätzliche Verzweigungsmöglichkeit mit entsprechenden Bewertungsprozeduren erweitert werden.

**Ansprüche**

1. Verfahren zum Beeinflussen von Wählziffernbewertungsund Umsetzprozeduren, mittels der die von einem Fernmeldeteilnehmer eines Fernmeldenetzes zu einem programmgesteuerten Fernmeldevermittlungssystem übertragenen Wählziffern bewertet werden und wenn erforderlich, die von einem Teilnehmer übertragene Wählziffernfolge in eine andere Wählziffernfolge umgesetzt wird, wobei die Wählziffernbewertungs- und Umsetzprozeduren in Verbindung mit Vermittlungsverfahren ablaufen, die durch von Fernmeldeteilnehmern oder von Vermittlungssystemen erzeugte unterschiedliche Signalisierungsanreize eingeleitet werden und jeweils zu einem signalisierungsabhängigen Vermittlungssystemzustand führen, **dadurch gekennzeichnet,** daß die von einem Fernmeldeteilnehmer kommenden Wählziffern mittels einer Wahlbewertungsprozedur (WABE) auf das Vorliegen einer umzusetzenden Wählziffernfolge untersucht werden, daß anschließend die umzusetzende Wählziffernfolge mittels einer Wählziffernumsetzprozedur (WUM,WUMK) in eine andere Wählziffernfolge umgesetzt und diese Wählziffernfolge wie eine von einem Fernmeldeteilnehmer kommende Wählziffernfolge ausgebildet wird und dieser Signalisierungsanreiz derselben Wahlbewertungsprozedur (WABE) unterzogen wird, daß dann die umgesetzte Wählziffernfolge erneut bewertet wird und daß je nach Bewertungsergebnis die Wählziffern in ein entsprechendes Vermittlungsverfahren (VM) einbezogen werden.

2. Verfahren nach Anspruch 1, **dadurch gekennzeichnet,** daß die von einem Fernmeldeteilnehmer ankommenden Wählziffern einer Kurzrufwählziffernfolge entsprechen und daß diese mittels eines Wählziffernumsetzprozedur (WUMK) in eine die Vermittlungsverfahren (VM) steuernde Fernsprechwählziffernfolge umgesetzt werden.

0 219 771

VPA 85 P 1801

## Bezugszeichenliste

| | |
|---|---|
| A | Zeitpunkt A |
| B | Zeitpunkt B |
| VM | Vermittlungsverfahren |
| WABE | Wahlbewertungsprozedur |
| WUM | Wahlziffernumsetzprozedur |
| WUMK | Wahlziffernumsetzprozedur für Kurzwählziffern |